# EUROPEAN PATENT SPECIFICATION

(11) **EP 1 250 276 B1**
(45) Date of publication and mention of the grant of the patent: **06.10.2004**
(21) Application number: 01901265.7
(22) Date of filing: 19.01.2001
(51) Int. Cl.: B65G 47/256

(54) **APPARATUS AND METHOD FOR SORTING OF ARTICLES**
VORRICHTUNG UND VERFAHREN ZUM SORTIEREN VON GEGENSTÄNDEN
APPAREIL ET PROCEDE DE TRI D'ARTICLES

(30) Priority: 27.01.2000 EP 00300600
(43) Date of publication of application: 23.10.2002
(73) Proprietor: CROWN Packaging Technology, Inc, Alsip, IL 60803-2599 (US)
(72) Inventor: DE SANTIS, Alfonso, I-Roma (IT)
(74) Representative: Ratliff, Ismay Hilary
(86) International application number: PCT/GB2001/000191
(87) International publication number: WO 2001/055014

(56) References cited:
- EP-A- 0 684 194
- DE-C- 453 052
- GB-A- 1 314 370
- US-A- 3 033 337

## Description

This invention relates to the sorting of articles such as caps for jars or bottles. These caps, whether they be metal, plastic, or combinations thereof, need to be fed at high speed to a capping machine where they are affixed onto the filled containers. The caps generally have a planar 'top' with a skirt depending therefrom. The caps may be either in a first (or "correct") orientation, with the skirt facing in one direction ready for feeding to a capping machine, or a second (or "incorrect") orientation, with the skirt facing in the opposite direction. This invention relates to a method and apparatus for sorting caps into their first and second orientations, so that only caps having a correct orientation are fed to the capping machine.

Previous proposals for cap sorting machines use vision systems to identify where the caps are in their correct orientation, and then take action to remove incorrectly oriented caps from the stream, either by mechanical means or by directing a pulse of fluid such as compressed air to blow the caps out of the stream.

One such device for sorting articles which uses compressed air according to the preamble of claim 1 is described in US-3,033,337. In this patent, "particles" of low mass and dimension move from one plane to another to be sorted by high pressure air jets and then pass upwards or downwards through further canals according to orientation. Not only is this apparatus complicated in function and design but due to the changes in direction and level required for operation, the selection is not continuous. Furthermore, operation of the system is only applicable to "particles" of low mass and dimension and the use of compressed air may lead to "particle" damage.

Proximity sensors may also be used to detect the orientation of the caps. Where caps are formed of a magnetic material such as steel, a magnetic sorting technique can be employed. This uses the difference in magnetic attraction between correct and incorrectly oriented caps (one of which contacts the magnetic belt with only its "rim" and the other with the whole "top" of the cap). The disadvantage with all of these techniques is the speed at which they can be employed, and there remains a need for a sorting technique which can be used at high speeds.

Accordingly there is provided an apparatus for sorting articles such as caps having the characterising features of claim 1.

Conveniently there is at least a first fluid inlet adapted to direct fluid into the sorting zone at an angle such that articles having a first orientation are urged towards the first exit whilst articles having the second orientation are substantially unaffected. The invention relies on the principle that a continuous flow of fluid directed at an angle from above or below will have a different effect on an article such as a cap depending on whether it is in its first or second orientation. If the fluid strikes the planar top of the cap, the cap will be relatively unaffected. However, when the same continuous flow of fluid strikes the cap in its opposite orientation, the fluid will impinge on the upstanding side wall of the cap and move it sideways. It is this principle which is used to sort the caps at high speed.

In one such arrangement the articles are fed on a carrier (such as a chute or rails) which is tilted at a slight angle to cause the caps to travel naturally to the second exit. However, for correctly oriented caps, the fluid pushes the caps against the angle of the carrier towards the first exit. Hence the caps are sorted whilst being continuously fed through the sorting zone. In a preferred arrangement there is at least a second fluid inlet adapted to direct fluid into the sorting zone at an angle such that articles having the second orientation are urged towards the second exit whereas articles having the first orientation are substantially unaffected. Conveniently the at least one first fluid inlet is adapted to direct fluid from a first face of the sorting zone and having a component in a direction towards a first side of the sorting zone, whilst the at least one second fluid inlet is adapted to direct fluid from a second face of the sorting zone and having a component towards the second side of the sorting zone. In this arrangement the requirement for a tilted carrier is obviated, and articles are urged one way or another, towards the first and second exits depending on their orientation.

Preferably there is a plurality of first and second fluid inlets extending along the sorting zone. The fluid inlets may conveniently direct fluid having a component urging the articles forward in the direction in which they are travelling through the sorting zone, in addition to a sideways component urging them towards either the first or second exits. The fluid is conveniently air in which case the fluid source is one or more fans. Conveniently the fluid source is a single fan adapted to supply a continuous flow of air to each of the or each first fluid inlets and the or each second fluid inlets. In one convenient arrangement the sorting zone is essentially Y-shaped with the input path at one end and the first and second exits at the opposite end.

The invention further resides in a method of sorting articles such as caps which can have either a first or a second orientation, the method comprising the steps of:
i) conveying the articles through a sorting zone in an unsorted distribution of their first and second orientations, the sorting zone having first and second exits; and
ii) directing at least one jet of high volume low pressure fluid continuously across the sorting zone at an oblique angle such that articles having the first orientation are directed towards the first exit, and articles having the second orientation are directed towards the second exit;
   said steps (i) and (ii) being operated in a single plane.

The present invention will now be further described, by way of example only, with reference to the accompanying drawings, in which:-
Fig.1 is a schematic front view of apparatus in accordance with the first invention.
Fig.2 is a sectional plan view through the line A-A in Fig.1,
Figs. 3 and 4 are enlarged schematic views through a part of the apparatus of Fig.1, showing a cap in a correct and incorrect orientation respectively, and
Fig.5 is a schematic sectional view equivalent to Fig.4, but according to an alternative embodiment of the invention.

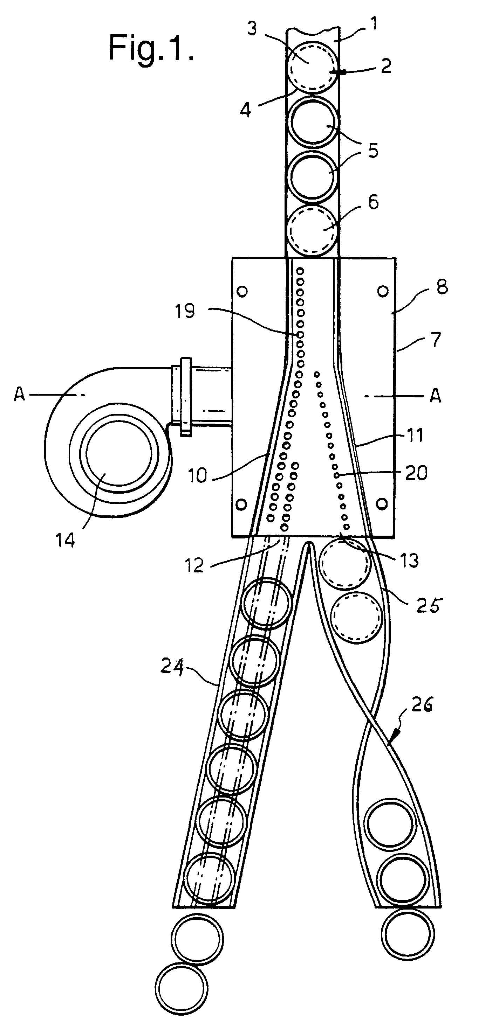

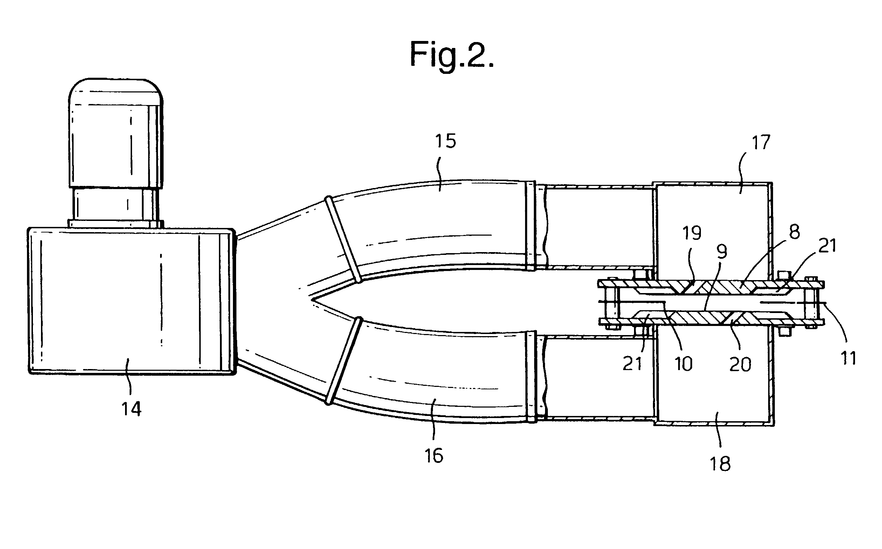

Referring to Figs. 1 and 2, there is shown a cap sorting station comprising an input chute 1, on which caps 2 are fed in a steady stream. The caps comprise essentially a central panel 3, and a side wall skirt 4 depending therefrom. The caps can therefore assume one of two orientations, a first orientation shown generally at 5, or a second orientation shown generally at 6.

Caps from the input chute 1 are fed to a sorting zone 7 which is defined by a front plate 8, a back plate 9, and side rails 10 and 11. At the entrance to the sorting zone, the side rails are parallel, but further along the sorting zone they diverge to allow two possible exits 12 and 13 from the sorting zone. A first exit 12 is adjacent the side rail 10, whilst the second exit 13 is adjacent the side rail 11.

A fan 14 supplies a continuous flow of air through ducts 15 and 16 to chambers 17 and 18 adjacent the front plate 8 and back plate 9 respectively. The front plate 8 is provided with a plurality of holes 19 which allow air from the chamber 17 to enter the sorting zone 7. The holes are angled such that the air flowing therethrough has a component directed towards the side rail 10. In similar fashion the back plate 9 has a plurality of holes 20 allowing air to enter the sorting zone 7 from the chamber 18, the holes 20 being angled such that the air flow has a component directed towards the side rail 11. Recesses 21, located in the front and back plates 8 and 9 towards the edges thereof, allow the air entering the sorting zone via the holes 19 and 20 to vent. The holes 19 and 20 are angled, not only towards the side rails 10 and 11, but also with a component in the general direction of the exits 12 and 13, to propel the caps along the sorting zone 7.

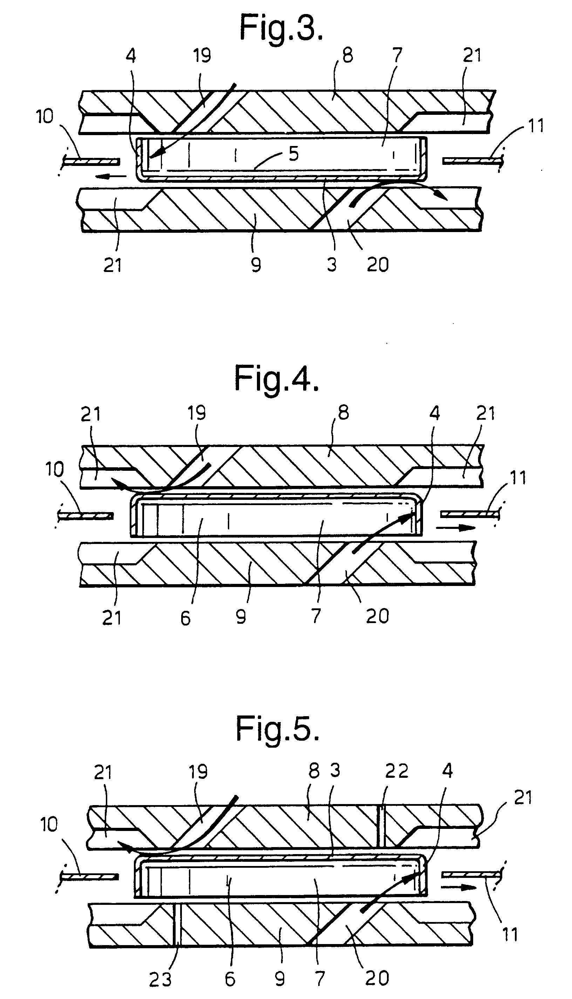

The separation of the correctly oriented caps 5 and the incorrectly oriented caps 6 will now be described with specific reference to Figs. 3 and 4. As a correctly oriented cap progresses through the sorting zone 7, jets of air will impinge upon the cap through the angled holes 19 and 20. As is shown in Fig.3, the air flowing through the holes 20 will impinge upon the panel 3, and will have minimal impact upon the cap. However, the air flowing through the holes 19 will impact upon the side skirt 4 and push the cap towards the side rail 10. Hence as the cap progresses through the sorting zone 7, it will follow the side rail 10 to the first exit 12.

Conversely, an incorrect oriented cap 6 will experience a different reaction to the same pattern of air flow from holes 19 and 20. As shown in Fig.4, the air flowing through the holes 19 will impinge upon the panel 3 and have minimal effect, whilst the air flowing through the holes 20 will this time impinge upon the side skirt 4 propelling the cap towards the side rail 11. Thus incorrectly oriented caps will follow side rail 11 to the second exit 13.

A first output chute 24 for correct caps is associated with the exit 12, whilst a second output chute 25 for incorrect caps is associated with the exit 13. The chute 25 has a 180° twist as shown at 26 to cause the incorrect caps to be inverted (turning them into correctly oriented caps) before they rejoin the stream of caps at a merging station (not shown).

Fig.5 shows an alternative embodiment in which additional holes 22 and 23 are provided in the front plate 8 and back plate 9 respectively, opposite the angled holes 19 and 20. The additional holes 22 and 23 are perpendicular to the front and back plates, rather than being angled, and are smaller in diameter than the angled holes 19 and 20. Air from the chambers 17 and 18 flows through the additional holes 22 and 23, the purpose of which is to counterbalance the air flow from the holes 19 and 20 and prevent the cap 6 from being twisted within the sorting zone. This ensures that the air flow from the angled holes 19 and 20 moves the caps sideways rather than jamming the caps in the sorting zone 7 between the front plate 8 and back plate 9.

It will be seen that the fan generates a constant flow of air which is deployed equally to correctly and incorrectly oriented caps and it is only the different orientation of the caps which causes them to react differently to the flow of air. The apparatus is therefore simple and can operate at high speed, allowing a fast throughput of caps, as it does not require any changes (e.g. pulses of air, mechanical switches etc) as the individual caps pass by. Speeds of 2200 caps per minute have been achieved with the apparatus described above. Furthermore, multi-size caps of different diameter and height can be accommodated in the same unit.

## Claims

1. Apparatus for sorting articles such as caps (2) which can have either a first correct orientation or a second incorrect orientation, the apparatus comprising:
i) a sorting zone (7);
ii) an input path (1) for feeding articles to the sorting zone (7) in an unsorted distribution of their first and second orientations;
iii) a first exit (12) associating the sorting zone with a first output path (24) for articles having their first orientation;
iv) a second exit (13) associating the sorting zone with a second output path (25) for articles having their second orientation; and
v) at least one source (14) of fluid, **characterised in that** the sorting zone (7), the input path (1), the first output path (24) and the second output path (25) are situated in a single plane such that the articles move in one plane and **in that** a high volume of low pressure fluid is caused to impinge continuously across the sorting zone (7) at an oblique angle such that articles having the first orientation are directed towards the first exit (12) whilst articles having the second orientation are directed towards the second exit (13).

2. Apparatus according to claim 1, **characterised in that** there is at least a first fluid inlet (19) adapted to direct fluid into the sorting zone (7) at an angle such that articles having the first orientation are urged towards the first exit (12) whilst articles having the second orientation are substantially unaffected.

3. Apparatus according to claim 2, **characterised in that** there is at least a second fluid inlet (20) adapted to direct fluid into the sorting zone (7) at an angle such that articles having the second orientation are urged towards the second exit (13) whilst articles having the first orientation are substantially unaffected.

4. Apparatus according to claim 2, **characterised in that** the at least one first fluid inlet (19) is adapted to direct fluid from a first face (8) of the sorting zone (7) and having a component in a direction towards a first side of the sorting zone.

5. Apparatus according to claim 3, **characterised in that** the at least one second fluid inlet (20) is adapted to direct fluid from a second face (9) of the sorting zone (7) and having a component in a direction towards a second side of the sorting zone.

6. Apparatus according to claim 2, **characterised in that** there is a plurality of first fluid inlets (19) extending along the sorting zone.

7. Apparatus according to claim 3, **characterised in that** there is a plurality of second fluid inlets (20) extending along the sorting zone.

8. Apparatus according to any preceding claim, **characterised in that** the fluid is air.

9. Apparatus according to claim 8, **characterised in that** the fluid source (14) is one or more fans.

10. Apparatus according to claim 9, **characterised in that** the fluid source (14) is a single fan adapted to supply a continuous flow of air to each of the or each first fluid inlets (19) and the or each second fluid inlets (20).

11. Apparatus according to any preceding claim, **characterised in that** the sorting zone (7) is essentially Y-shaped with the input path (1) at one end and the first and second exits (12,13) at the opposite end.

12. A method of sorting articles (2) such as caps which can have either a first or a second orientation, the method comprising the steps of:
i) conveying the articles through a sorting zone (7) in an unsorted distribution of their first and second orientations, the sorting zone having first and second exits (12,13); and
ii) directing at least one jet of high volume low pressure fluid continuously across the sorting zone (7) at an oblique angle such that articles having the first orientation are directed towards the first exit (12), and articles having the second orientation are directed towards the second exit (13);
said steps (i) and (ii) being operated in a single plane.

## Patentansprüche

1. Vorrichtung zum Sortieren von Gegenständen, wie Deckeln (2), die entweder eine erste richtige Ausrichtung oder eine zweite unrichtige Ausrichtung aufweisen können, wobei die Vorrichtung umfasst:
i) eine Sortierzone (7);
ii) einen Eingabepfad (1) zum Zuführen von Gegenständen zur Sortierzone (7) in einer unsortierten Verteilung ihrer ersten und ihrer zweiten Ausrichtung;
iii) einen ersten Ausgang (12), der die Sortierzone mit einem ersten Ausgabepfad (24) für Gegenstände verbindet, die ihre erste Ausrichtung aufweisen;
iv) einen zweiten Ausgang (13), der die Sortierzone mit einem zweiten Ausgabepfad (25) für Gegenstände verbindet, die ihre zweite Ausrichtung aufweisen; und
v) mindestens eine Fluidquelle (14),
**dadurch gekennzeichnet, dass** sich die Sortierzone (7), der Eingabepfad (1), der erste Ausgabepfad (24) und der zweite Ausgabepfad (25) in einer einzigen Ebene befinden, so dass sich die Gegenstände in einer Ebene bewegen, und dass veranlasst wird, dass ein hohes Volumen an Niederdruckfluid über die Sortierzone (7) kontinuierlich unter einem schrägen Winkel auftrifft, so dass Gegenstände mit der ersten Ausrichtung zum ersten Ausgang (12) hin gelenkt werden, während Gegenstände mit der zweiten Ausrichtung zum zweiten Ausgang (13) hin gelenkt werden.

2. Vorrichtung nach Anspruch 1,
**dadurch gekennzeichnet, dass** mindestens ein erster Fluideinlass (19) vorhanden ist, der angepasst ist, um Fluid unter einem solchen Winkel in die Sortierzone (7) zu lenken, dass Gegenstände mit der ersten Ausrichtung zum ersten Ausgang (12) hin gedrängt werden, während Gegenstände mit der zweiten Ausrichtung im Wesentlichen unbeeinflusst sind.

3. Vorrichtung nach Anspruch 2,
**dadurch gekennzeichnet, dass** mindestens ein zweiter Fluideinlass (20) vorhanden ist, der angepasst ist, um Fluid unter einem solchen Winkel in die Sortierzone (7) zu lenken, dass Gegenstände mit der zweiten Ausrichtung zum zweiten Ausgang (13) hin gedrängt werden, während Gegenstände mit der ersten Ausrichtung im Wesentlichen unbeeinflusst sind.

4. Vorrichtung nach Anspruch 2,
**dadurch gekennzeichnet, dass** der mindestens eine erste Fluideinlass (19) angepasst ist, um Fluid aus einer ersten Fläche (8) der Sortierzone (7) und mit einer Komponente in einer Richtung zu einer ersten Seite der Sortierzone hin zu lenken.

5. Vorrichtung nach Anspruch 3,
**dadurch gekennzeichnet, dass** der mindestens eine zweite Fluideinlass (20) angepasst ist, um Fluid aus einer zweiten Fläche (9) der Sortierzone (7) und mit einer Komponente in einer Richtung zu einer zweiten Seite der Sortierzone hin zu lenken.

6. Vorrichtung nach Anspruch 2,
**dadurch gekennzeichnet, dass** eine Mehrzahl von ersten Fluideinlässen (19) vorhanden ist, die sich entlang der Sortierzone erstrecken.

7. Vorrichtung nach Anspruch 3,
**dadurch gekennzeichnet, dass** eine Mehrzahl von zweiten Fluideinlässen (20) vorhanden ist, die sich entlang der Sortierzone erstrecken.

8. Vorrichtung nach einem vorangehenden Anspruch,
**dadurch gekennzeichnet, dass** das Fluid Luft ist.

9. Vorrichtung nach Anspruch 8,
**dadurch gekennzeichnet, dass** die Fluidquelle (14) aus einem oder mehreren Gebläsen besteht.

10. Vorrichtung nach Anspruch 9,
**dadurch gekennzeichnet, dass** die Fluidquelle (14) ein einzelnes Gebläse ist, das angepasst ist, um einen ununterbrochenen Luftstrom zu jedem von den oder jeden ersten Fluideinlässen (19) und den oder jeden zweiten Fluideinlässen (20) zuzuführen.

11. Vorrichtung nach einem vorangehenden Anspruch,
**dadurch gekennzeichnet, dass** die Sortierzone (7) im Wesentlichen Y-förmig ist, mit dem Eingabepfad (1) an einem Ende und dem ersten und zweiten Ausgang (12, 13) am entgegengesetzten Ende.

12. Verfahren zum Sortieren von Gegenständen (2), wie Deckeln, die entweder eine erste oder eine zweite Ausrichtung aufweisen können, wobei das Verfahren die Schritte umfasst:
i) Transportieren der Gegenstände durch eine Sortierzone (7) in einer unsortierten Verteilung ihrer ersten und ihrer zweiten Ausrichtung, wobei die Sortierzone einen ersten und einen zweiten Ausgang (12, 13) aufweist; und
ii) Lenken von mindestens einem Strahl Niederdruckfluid mit hohem Volumen kontinuierlich unter einem schrägen Winkel über die Sortierzone (7), so dass Gegenstände mit der ersten Ausrichtung zum ersten Ausgang (12) hin gelenkt werden, und Gegenstände mit der zweiten Ausrichtung zum zweiten Ausgang (13) hin gelenkt werden;
wobei die Schritte (i) und (ii) in einer einzigen Ebene vorgenommen werden.

## Revendications

1. Appareil pour trier des articles tels que des capsules (2) qui peuvent avoir soit une première orientation correcte, soit une deuxième orientation incorrecte, l'appareil comprenant :
i) une zone de tri (7) ;
ii) un passage d'entrée (1) pour distribuer des articles jusqu'à la zone de tri (7) dans une distribution sans tri de leurs première et deuxième orientations ;
iii) une première sortie (12) associant la zone de tri à un premier passage de sortie (24) pour les articles ayant leur première orientation ;
iv) une deuxième sortie (13) associant la zone de tri à un deuxième passage de sortie (25) pour les articles ayant leur deuxième orientation ; et
v) au moins une source (14) de fluide,
**caractérisé en ce que** la zone de tri (7), le passage d'entrée (1), le premier passage de sortie (24) et le deuxième passage de sortie (25) sont situés dans un seul plan de manière que les articles se déplacent dans un seul plan et **en ce que** un volume important de fluide à basse pression est amené à entrer en collision en continu à travers la zone de tri (7) à un angle tel que les articles ayant la première orientation sont dirigés vers la première sortie (12) tandis que les articles ayant la deuxième orientation sont dirigés vers la deuxième sortie (13).

2. Appareil selon la revendication 1, **caractérisé en ce qu'**il existe au moins une première entrée de fluide (19) adaptée à diriger le fluide dans la zone de tri (7) à un angle tel que les articles ayant la première orientation sont sollicités vers la première sortie (12) tandis que les articles ayant la deuxième orientation sont sensiblement non influencés.

3. Appareil selon la revendication 2, **caractérisé en ce qu'**il existe au moins une deuxième entrée de fluide (20) adaptée à diriger le fluide dans la zone de tri (7) à un angle tel que les articles ayant la deuxième orientation sont sollicités vers la deuxième sortie (13) tandis que les articles ayant la première orientation sont sensiblement non influencés.

4. Appareil selon la revendication 2, **caractérisé en ce que** ladite au moins une première entrée de fluide (19) est adaptée à diriger le fluide depuis une première face (8) de la zone de tri (7), et le fluide ayant une composante dans une direction vers un premier côté de la zone de tri.

5. Appareil selon la revendication 3, **caractérisé en ce que** ladite au moins une deuxième entrée de fluide (20) est adaptée à diriger le fluide depuis une deuxième face (9) de la zone de tri (7) et le fluide ayant une composante dans une direction vers un deuxième côté de la zone de tri.

6. Appareil selon la revendication 2, **caractérisé en ce qu'**il existe une pluralité de premières entrées de fluide (19) s'étendant le long de la zone de tri.

7. Appareil selon la revendication 3, **caractérisé en ce qu'**il existe une pluralité de deuxièmes entrées de fluide (20) s'étendant le long de la zone de tri.

8. Appareil selon l'une quelconque des revendications précédentes, **caractérisé en ce que** le fluide est de l'air.

9. Appareil selon la revendication 8, **caractérisé en ce que** la source de fluide (14) consiste en un ou plusieurs ventilateurs.

10. Appareil selon la revendication 9, **caractérisé en ce que** la source de fluide (14) est un ventilateur unique adapté à fournir un flux d'air continu à la ou à chaque première entrée de fluide (19) et à la ou à chaque deuxième entrée de fluide (20).

11. Appareil selon l'une quelconque des revendications précédentes, **caractérisé en ce que** la zone de tri (7) est essentiellement en forme de Y avec le passage d'entrée (1) à une extrémité et les première et deuxième sorties (12, 13) à l'extrémité opposée.

12. Procédé pour trier des articles (2) tels que des capsules qui peuvent avoir soit une première orientation, soit une deuxième orientation, le procédé comprenant les étapes consistant à :
i) transporter les articles à travers une zone de tri (7) dans une distribution sans tri de leurs première et deuxième orientations, la zone de tri comportant des première et deuxième sorties (12, 13) ; et
ii) diriger au moins un volume important de jet de fluide à basse pression en continu à travers la zone de tri (7) à un angle oblique de manière que les articles ayant la première orientation soient dirigés vers la première sortie (12), et les articles ayant la deuxième orientation soient dirigés vers la deuxième sortie (13) ;
lesdites étapes (i) et (ii) ayant lieu dans un seul plan.
